# EUROPÄISCHE PATENTSCHRIFT

(11) **EP 1 159 170 B1**
(45) Veröffentlichungstag und Bekanntmachung des Hinweises auf die Patenterteilung: **28.04.2004**
(21) Anmeldenummer: 00907467.5
(22) Anmeldetag: 13.01.2000
(51) Int. Cl.: B60S 1/08, G06K 9/20

(54) **ANORDNUNG ZUM DETEKTIEREN VON AUF EINER WINDSCHUTZSCHEIBE EINES KRAFTFAHRZEUGES BEFINDLICHEN OBJEKTEN**
DEVICE FOR DETECTING OBJECTS ON A WINDSCREEN OF A MOTOR VEHICLE
DISPOSITIF POUR DETECTER DES OBJETS SE TROUVANT SUR UN PARE-BRISE D'UN VEHICULE AUTOMOBILE

(30) Priorität: 06.03.1999 DE 19909987
(43) Veröffentlichungstag der Anmeldung: 05.12.2001
(73) Patentinhaber: Leopold Kostal GmbH & Co. KG, 58507 Lüdenscheid (DE)
(72) Erfinder: MINDL, Anton, D-58515 Lüdenscheid (DE); BLÄSING, Frank, D-59457 Werl (DE)
(86) Internationale Anmeldenummer: PCT/EP2000/000181
(87) Internationale Veröffentlichungsnummer: WO 2000/053465

(56) Entgegenhaltungen:
- EP-A- 0 513 476
- EP-A- 0 551 984
- EP-A- 0 832 798
- US-A- 5 661 303

## Beschreibung

Die Erfindung betrifft eine Anordnung zum Detektieren von auf einer Windschutzscheibe eines Kraftfahrzeuges befindlichen Objekten, umfassend eine Abbildungseinheit mit einem optoelektronischen Sensorarray und einem einen Windschutzscheibenausschnitt auf der photosensitiven Oberfläche des Sensorarrays abbildenden und auf diesen Windschutzscheibenausschnitt fokussierten Objektiv und umfassend eine durch die elektrischen Signale des Sensorarrays beaufschlagte Auswerteeinheit zum Auswerten des auf der photosensitiven Oberfläche des Sensorarrays abgebildeten Windschutzscheibenausschnittes.

Eine solche auch als Regensensor bezeichnete Anordnung ist aus der EP 0 832 798 A2 bekannt. Diese vorbekannte Detektionseinrichtung besteht aus einer Abbildungseinheit zum Abbilden von auf der Windschutzscheibe eines Kraftfahrzeuges befindlichen Wassertropfen auf einem Kamerasensor, dessen Objektiv vom Innenraum des Kraftfahrzeuges zur Windschutzscheibe hin gerichtet und auf den erfaßten Windschutzscheibenausschnitt fokussiert ist.

Der Kamerasensor ist im Bereich des Innenraumrückspiegels in Fahrtrichtung nach vorne blickend angeordnet. Eine Auswertung der erfaßten Bilddaten erfolgt in einer Auswerteeinheit, die ebenfalls zum Ansteuern eines Wischermotors in Abhängigkeit von den erfaßten Bilddaten vorgesehen ist.

Diese Detektionsanordnung umfaßt ferner eine als Mattscheibe dienende transparente Folie, die innenseitig im Bereich des von der Abbildungseinheit erfaßten Windschutzscheibenausschnittes auf die Oberfläche der Windschutzscheibe aufgeklebt ist. Die transparente Folie dient einer verbesserten Regentropfenabbildung durch Unterdrückung einer Hintergrundabbildung auf der photosensitiven Oberfläche des Kamerasensors. Aufgrund des notwendigen Einsatzes einer solchen transparenten Folie kann die Abbildungseinheit dieser Detektionsanordnung lediglich auf solche Windschutzscheibenausschnitte gerichtet sein, die dem Sekundärgesichtsfeld des Fahrers bzw. des Beifahrers zugeordnet sind. Eine Betrachtung des Sekundärgesichtsfeldes vermag zwar im allgemeinen auch die Sichtverhältnisse im Bereich der Primärgesichtsfelder von Fahrer und Beifahrer, wie dies beispielsweise bei einer durch Regen benetzten Windschutzscheibe der Fall ist, wiederzugeben. Es kommt jedoch vor, daß sich Wassertropfen auf der Windschutzscheibe eines Kraftfahrzeuges befinden, die sich lediglich in Teilbereichen der Windschutzscheibe, beispielsweise im Primärgesichtsfeld des Fahrers bemerkbar machen. Derartige selektive Windschutzscheibenbenetzungen können beispielsweise bei Tunneldurchfahrten auftreten, wenn von der Tunneldecke einzelne Wassertropfen herabfallen. Eine ungleichmäßige Gesichtsfeldbeeinträchtigung ist im allgemeinen auch bei Verschmutzungen die Regel.

Auch im Zuge einer getrennten Scheibenwischermotoransteuerung von Fahrer- und Beifahrerseite ist eine Erfassung eines Windschutzscheibenausschnittes in einem für beide Gesichtsfelder gemeinsamen Sekundärgesichtsfeld nicht ausreichend.

Ausgehend von diesem diskutierten Stand der Technik liegt der Erfindung daher die Aufgabe zugrunde, eine eingangs genannte Anordnung zum Detektieren von auf einer Windschutzscheibe eines Kraftfahrzeuges befindlichen Objekten dergestalt weiterzubilden, daß eine gesichtsfeldselektive, insbesondere auch auf ein Primärgesichtsfeld gerichtete Windschutzscheibenausschnitterfassung möglich ist.

Diese Aufgabe wird erfindungsgemäß dadurch gelöst, daß die Anordnung weitere, an die Auswerteeinheit angeschlossene Abbildungseinheiten zum Abbilden weiterer, jeweils unterschiedlicher Winschutzscheibenausschnitte umfaßt, wobei zumindest eine Abbildungseinheit zum Erfassen eines einem Primärgesichtsfeld zugeordneten Windschutzscheibenausschnittes vorgesehen ist.

Die erfindungsgemäße Detektionsanordnung verwendet mehrere einzelne Abbildungseinheiten zum Abbilden jeweils unterschiedlicher Windschutzscheibenausschnitte. Dabei ist vorgesehen, daß zumindest eine Abbildungseinheit zum Erfassen eines Ausschnittes des Primärgesichtsfeldes des Fahrers und zweckmäßigerweise eine weitere zum Abbilden des Primärgesichtsfeldes des Beifahrers angeordnet ist. Diese windschutzscheibenauschnittsselektive Erfassung erlaubt eine entsprechend selektive Auswertung und somit auch eine selektive Ansteuerung entsprechender Aktoren, beispielsweise eines Wischermotors. Dieser wird durch die Auswerteeinheit angesteuert, wenn im Primärgesichtsfeld auf der Windschutzscheibe Objekte anhaften. Dies erfolgt auch dann, wenn beispielsweise nur in einem Primärfeld ein die Sicht beeinträchtigendes Objekt auf der Windschutzscheibe vorhanden ist. Besonders zweckmäßig ist eine solche windschutzscheibenausschnittsselektive Objekterfassung bei einem Einsatz seitenunabhängiger Scheibenwischermotoren. Ist bei einem Einsatz von zwei Wischermotoren beispielsweise ausschließlich eine Verschmutzung im Primärgesichtsfeld der Fahrerseite detektiert worden, braucht nur dieser Wischermotor angesteuert zu werden. Ein Wischen des dem Beifahrer zugeordneten Windschutzscheibenbereiches erfolgt dagegen nicht.

Die Objektive der einzelnen Abbildungseinheiten sind zweckmäßigerweise dergestalt auf den erfaßten Windschutzscheibenausschnitt fokussiert, daß sich der abzubildende Windschutzscheibenausschnitt innerhalb des Schärfentiefenbereiches der Objektivfokussierung befindet. Die gewünschte Schärfentiefe kann beispielsweise durch Einsatz einer dem Objektiv vorgeschalteten Blende erreicht werden. Zur Unterdrückung von sich ändernden Umgebungsbedingungen, die eine Objektdetektion auf der Windschutzscheibe beeinträchtigen könnten, ist vorgesehen, daß zumindest diejenigen Abbildungseinheiten, die zum Abbilden eines in einem Primärgesichtsfeld befindlichen Windschutzscheibenausschnittes vorgesehen sind, in einer schräg nach unten gerichteten Blickrichtung zur Windschutzscheibe angeordnet sind. Durch die nach unten gerichtete Blickrichtung ist der Hintergrund des auf dem Sensorarray abgebildeten Bildes quasi gleichbleibend, da in einem solchen Blickwinkel der abgebildete Hintergrund in der Regel die Oberseite der Motorhaube ist. Kraftfahrzeugumgebungsbedingte Änderungen werden allenfalls in Form von Helligkeitsunterschieden dieses Hintergrundes erfaßt und beeinträchtigen eine exakte und sichere Objektdetektion auf der Windschutzscheibe nicht. Entsprechendes gilt für solche Kraftfahrzeuge, die keine nach vorne ausladende Motorhaube aufweisen, da bei diesen die dunkle Straßenbelagsoberfläche den Hintergrund der durch die Abbildungseinheiten abgebildeten Objekte dient. Es sei angemerkt, daß sich diese Hintergrundbereiche nicht im Schärfentiefenbereich befinden und somit ohnehin nur sehr unscharf abgebildet werden. Ein Einsatz zusätzlicher optischer Abschirmungen zum Unterdrücken umgebungsbedingter Einflüsse ist bei einer solchen Ausrichtung eine Abbildungseinheit grundsätzlich nicht notwendig.

Es ist zweckmäßig, die einzelnen Abbildungseinheiten, wobei bevorzugt drei Abbildungseinheiten vorgesehen sind, in einer gegenständlichen Einheit zusammengefaßt, etwa als Detektionsmodul im Kraftfahrzeug anzuordnen. Eine solche Anordnung kann sich beispielsweise im Bereich des Rückspiegels oder in ein Dachmodul integriert vorgesehen sein. Dabei ist es möglich, jeder Abbildungseinheit ein eigenes Objektiv sowie ein eigenes Sensorarray zuzuordnen. Ebenfalls kann vorgesehen sein, daß einzelne Abbildungseinheiten oder auch alle eingesetzten Abbildungseinheiten zwar ein jeweils eigenes Objektiv aufweisen, daß diese jedoch gemeinsam ein einziges Sensorarray belichten. In einer solchen Ausgestaltung ist es möglich, daß die einzelnen Abbildungseinheiten unterschiedliche Bereiche des Sensorarrays oder auch gemeinsam zumindest teilweise dieselben Sensorarraybereiche belichten. Diese Anordnung gewährleistet in hohem Maße eine besonders effiziente Ressourcenausnutzung. Bei einer Belichtung der selben Sensorarraybereiche durch mehrere Abbildungseinheiten ist in den Strahlengang einer jeden Abbildungseinheit eine unter Ausnutzung eines elektrooptischen Effekts elektrisch ansteuerbare Verschlußeinheit eingeschaltet. Eine solche Verschlußeinheit dient zum Steuern der Belichtung der photosensitiven Oberfläche des Sensorarrays durch eine jede Abbildungseinheit, welche Steuerung ebenfalls durch die Auswerteeinheit erfolgt. Die Steuerung der Verschlußeinheit einer jeden Abbildungseinheit kann zeitlich getaktet oder auch in Abhängigkeit vordefinierter Zustände erfolgen. Eine derartige Verschlußeinheit kann beispielsweise als Flüssigkristallblende oder nach einem elektrochromen Prinzip arbeitend ausgebildet sein.

Auch wenn im Zuge der erfindungsgemäßen Anordnung einer einen Windschutzscheibenausschnitt eines Primärgesichtsfeldes abbildenden Abbildungseinheit eine Objekterfassung auf der Windschutzscheibe grundsätzlich ohne störende Hintergrundeinflüsse möglich ist, kann durch eine geneigte Anordnung der die Bildebene darstellenden photosensitiven Oberfläche des Sensorarrays und/oder der Objektivebene einer solchen Abbildungseinheit eine Neigung der Objektebene zur Ebene der Windschutzscheibe hin erreicht werden. Entsprechend ist auch der Schärfentiefenbereich ausgerichtet, so daß - wie in einer bevorzugten Ausgestaltung vorgesehen - der Schärfentiefenbereich quasi parallel zur Ebene der Windschutzscheibe angeordnet ist. Der im Zusammenhang dieser Ausführungen benutzte Begriff Abbildungsachse ist durch die Winkelhalbierende des Erfassungswinkels des Objektives definiert. Durch diese Möglichkeit der Minimierung des Schärfentiefenbereiches wird der von einer solchen Abbildungseinheit erfaßte Hintergrund so unscharf auf dem Sensorarray abgebildet, daß von diesem keine eine Objektdetektion störende Einflüsse ausgehen. Vorteilhaft ist ferner, daß durch die mögliche geringe Schärfentiefe die Lichtstärke des Objektivs und somit diejenige der Abbildung erheblich erhöht ist. In einer Ausgestaltung einer solchen Abbildungseinheit ist vorgesehen, daß die Neigung der Bildebene gegensinnig zur Neigung der Objektebene angeordnet ist und die Abbildungsachse der Objektiv-Sensorarray-Anordnung der optischen Achse des Objektivs entspricht. Bei dieser Ausgestaltung können auf der Windschutzscheibe anhaftende Objekte zu einem gewissen Ausmaß verzerrt auf dem Sensorarray abgebildet werden; dieses ist jedoch für eine Objektdetektion ohne Relevanz. Besonders zweckmäßig ist eine Anordnung zwischen der Objektebene, der Objektivebene und der Bildebene, bei der diese drei Ebenen eine Schnittgerade definieren. In dieser Ausgestaltung befindet sich die Objektebene in der Ebene der Windschutzscheibe, so daß in dieser Ausgestaltung die Fokussierung nur eine sehr geringe Schärfentiefe aufzuweisen braucht.

In einer weiteren Ausgestaltung einer solchen Abbildungseinheit ist vorgesehen, daß die Objektebene, die Objektivebene und die Bildebene gleichsinnig zur Abbildungsachse der Objektiv-Sensorarray-Anordnung geneigt, zweckmäßigerweise mit gleichen Winkeln geneigt angeordnet sind. Auch in einer solchen Anordnung befindet sich die Objektebene bei entsprechender Neigung von Bildebene und Objektivebene in der Ebene der Scheibe. Bei dieser Ausgestaltung erfolgt eine verzerrungsfreie Abbildung des gesamten betrachteten Windschutzscheibenausschnittes.

Eine zweckmäßige Ausgestaltung der Erfindung verwendet drei Abbildungseinheiten, von denen eine zum Erfassen eines dem Primärgesichtsfeld des Fahrers zugeordneten Windschutzscheibenausschnittes, eine weitere zum Erfassen eines dem Primärgesichtsfeld des Beifahrers zugeordneten Windschutzscheibenausschnittes und eine dritte Abbildungseinheit zum Erfassen des dem Sekundärgesichtsfeld des Fahrers bzw. Beifahrers zugeordneten Windschutzscheibenausschnittes angeordnet ist. Die Vorteile des unabhängigen Erfassens eines Windschutzscheibenausschnittes des Primärgesichtsfeldes des Fahrers bzw. Beifahrers sind bereits beschrieben. Die Ausrichtung einer Abbildungseinheit auf ein Sekundärgesichtsfeld, insbesondere auf ein durch einen Wischer nicht erreichtes Sekundärgesichtsfeld erlaubt eine Verwendung der diesem Windschutzscheibenausschnitt zugeordneten Daten als Referenz zu denjenigen der erfaßten Primärgesichtsfeldausschnitte.

Weitere Vorteile der Erfindung sind Bestandteil übriger Unteransprüche sowie der nachfolgenden Beschreibung eines Ausführungsbeispieles unter Bezugnahme auf die beigefügten Figuren. Es zeigen:
- **Fig. 1:**: eine schematisierte Darstellung einer Anordnung zum Detektieren von auf einer Windschutzscheibe eines Kraftfahrzeuges befindlichen Objekten aus einer vom Innenraum des Kraftfahrzeuges in Fahrtrichtung angeordneten Blickrichtung und
- **Fig. 2:**: eine schematisierte Seitendarstellung der Anordnung der Figur 1.

Eine Anordnung 1 zum Detektieren von auf einer Windschutzscheibe 2 eines nicht näher dargestellten Kraftfahrzeuges befindlichen Objekten umfaßt drei in einem Detektionsmodul 3 angeordnete, nicht näher dargestellte Abbildungseinheiten. Die Abbildungseinheiten sind zum Betrachten von drei unterschiedlichen Windschutzscheibenausschnitten A₁, A₂ und A₃ der Windschutzscheibe 2 angeordnet. Die betrachteten Windschutzscheibenausschnitte A₁ - A₃ sind Bestandteil unterschiedlicher Gesichtsfelder, wobei das primäre Fahrergesichtsfeld mit dem Bezugszeichen G₁, dasjenige des Beifahrers mit dem Bezugszeichen G₂ und das zwischen den beiden Gesichtsfeldern G₁ und G₂ liegende Sekundärgesichtsfeld mit dem Bezugszeichen G₃ gekennzeichnet sind. Die drei Abbildungseinheiten sind jeweils zum Betrachten eines Windschutzscheibenausschnittes A₁, A₂ oder A₃ angeordnet. Der erfaßte Windschutzscheibenausschnitt A₃ liegt in einem nicht durch einen Wischer gewischten Bereich, so daß dieser Windschutzscheibenausschnitt A₃ als Referenzwindschutzscheibenausschnitt bei einer Auswertung der durch Erfassen der Windschutzscheibenaussschnitte A₁ und A₂ gewonnen Bilddaten verwendet werden kann. Durch Einbeziehen eines solchen Windschutzscheibenausschnittes A₃ in die Auswertung kann das Wischresultat in den beiden weiteren Windschutzscheibenausschnitten A₁ und A₂ mit dem ursprünglichen Zustand verglichen werden. Die Objektive bilden den jeweiligen Windschutzscheibenausschnitt A₁, A₂ bzw. A₃ auf der photosensitiven Oberfläche eines für alle Objektive gemeinsam vorgesehenen Kamerasensors ab. In den Strahlengang jedes abbildenden Objektives ist ein Lichtschalter eingeschaltet, so daß der Kamerasensor wahlweise von einem der drei Objektive belichtet werden kann. Als Lichtschalter ist eine in drei Teile segmentierte Flüssigkristallblende vorgesehen. Zur Auswertung der erfaßten Bilddaten und zum Ansteuern der Lichtschalter ist das Detektionsmodul 3 an eine Prozessoreinheit P angeschlossen.

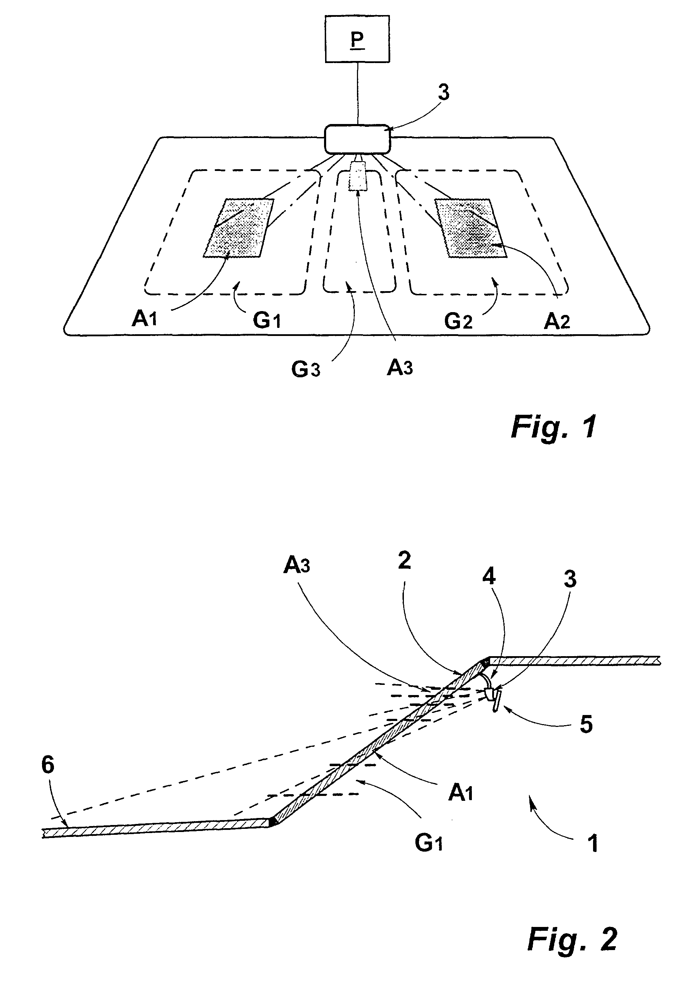

Das Detektionsmodul 3 ist, wie aus Figur 2 ersichtlich, in den Fuß 4 des Innenraumrückspiegels 5 integriert. Ebenfalls läßt sich dieser Abbildung die Ausrichtung der einen Windschutzscheibenausschnitt A₁ oder A₂ in einem Primärgesichtsfeld G₁ oder G₂ erfassenden Abbildungseinheit entnehmen. Dargestellt ist der Erfassungsbereich der auf das Fahrerprimärgesichtsfeld G₁ gerichteten Einheit. Diese Abbildungseinheit ist in einer schräg nach unten gerichteten Blickrichtung zu dem zu erfassenden Windschutzscheibenausschnitt A₁ angeordnet. Die Blickrichtung dieser Abbildungseinheit bedingt, daß sich im Hintergrund des fokussierten Windschutzscheibenausschnittes A₁ die Oberseite der Motorhaube 6 befindet. Sich infolge der Kraftfahrzeugbewegung ändernde Umgebungseinflüsse befinden sich somit nicht im Gesichtsfeld dieser Abbildungseinheit, so daß eine durch Störeinflüsse unbeeinflußte Objektdetektion auf der Windschutzscheibe 2 möglich ist.

Die Erfassung der Windschutzscheibenausschnitte A₁ - A₃ kann ausgelegt sein, daß sowohl auf der Außenseite der Windscheibe 2 als auch auf der Innenseite der Windschutzscheibe 2 anhaftende Objekte detektierbar sind. Bei den auf der Innenseite der Windschutzscheibe 2 anhaftenden Objekten kann es sich beispielsweise um kleinste Wassertröpfchen infolge eines Beschlagens der Windschutzscheibe handeln, bei welcher Detektion eine Gebläseeinrichtung angesteuert werden kann. Infolge der windschutzscheibenausschnittsselektiven Erfassung kann ebenfalls eine Gebläseansteuerung auf bestimmte Gesichtsfelder beschränkt erfolgen.

### Zusammenstellung der Bezugszeichen

- 1: Detektionsanordnung
- 2: Windschutzscheibe
- 3: Detektionsmodul
- 4: Fuß des Innenraumrückspiegels
- 5: Innenraumrückspiegel
- 6: Motorhaube

- A₁ - A₃: Windschutzscheibenausschnitt
- G₁ - G₃: Gesichtsfeld
- P: Prozessoreinheit

## Patentansprüche

1. Anordnung zum Detektieren von auf einer Windschutzscheibe eines Kraftfahrzeuges befindlichen Objekten, umfassend eine Abbildungseinheit mit einem optoelektronischen Sensorarray und einem einen Windschutzscheibenausschnitt (A₃) auf der photosensitiven Oberfläche des Sensorarrays abbildenden und auf diesen Windschutzscheibenausschnitt (A₃) fokussierten Objektiv und umfassend eine durch die elektrischen Signale des Sensorarrays beaufschlagte Auswerteeinheit (P) zum Auswerten des auf der photosensitiven Oberfläche des Sensorarrays abgebildeten Windschutzscheibenausschnittes (A₃), **dadurch gekennzeichnet, daß** die Anordnung (1) weitere, an die Auswerteeinheit (P) angeschlossene Abbildungseinheiten zum Abbilden weiterer, jeweils unterschiedlicher Winschutzscheibenausschnitte (A₁, A₂) umfaßt, wobei zumindest eine Abbildungseinheit zum Erfassen eines einem Primärgesichtsfeld (G₁, G₂) zugeordneten Windschutzscheibenausschnittes (A₁, A₂) vorgesehen ist.

2. Anordnung nach Anspruch 1, **dadurch gekennzeichnet, daß** zumindest eine zum Erfassen eines einem Primärgesichtsfeld (G₁, G₂) zugeordneten Windschutzscheibenausschnittes (A₁, A₂) vorgesehene Abbildungseinheit in einer schräg nach unten gerichteten Blickrichtung zur Windschutzscheibe (2) angeordnet ist.

3. Anordnung nach Anspruch 1 oder 2, **dadurch gekennzeichnet, daß** die weiteren Abbildungseinheiten aus jeweils einem eigenen Objektiv und einem eigenen Sensorarray bestehen und sämtliche Abbildungseinheiten in einer gegenständlichen Einheit zusammengefaßt angeordnet sind.

4. Anordnung nach Anspruch 1 oder 2, **dadurch gekennzeichnet, daß** die weiteren Abbildungseinheiten aus jeweils einem eigenen Objektiv und einem gemeinsam genutzten Sensorarray bestehen, wobei eine Belichtung der photosensitiven Oberfläche des Sensorarrays durch die einzelnen Abbildungseinheiten auf zumindest teilweise denselben Sensorarraybereichen vorgesehen ist.

5. Anordnung nach Anspruch 4, **dadurch gekennzeichnet, daß** in den Strahlengang einer jeden Abbildungseinheit eine unter Ausnutzung eines elektrooptischen Effekts elektrisch ansteuerbare Verschlußeinheit zum Steuern der Belichtung der photosensitiven Oberfläche des Sensorarrays durch eine Abbildungseinheit eingeschaltet ist.

6. Anordnung nach einem der Ansprüche 1 bis 5, **dadurch gekennzeichnet, daß** die die Bildebene darstellende photosensitive Oberfläche des Sensorarrays und/oder die Objektivebene einer Abbildungseinheit zur Abbildungsachse der Objektiv-Sensorarray-Anordnung hin geneigt ist, so daß die durch das Objektiv fokussierte Objektebene schiefwinklig zur Abbildungsachse der Objektiv-Sensorarray-Anordnung angeordnet ist.

7. Anordnung nach einem der Ansprüche 1 bis 6, **dadurch gekennzeichnet, daß** die Anordnung drei Abbildungseinheiten umfaßt, von denen eine zum Erfassen eines dem Primärgesichtsfeld (G₁) des Fahrers zugeordneten Windschutzscheibenausschnittes (A₁), eine weitere zum Erfassen eines dem Primärgesichtsfeld (G₂) des Beifahrers zugeordneten Windschutzscheibenausschnittes (A₂) und eine dritte Abbildungseinheit zum Erfassen eines dem Sekundärgesichtsfeld (G₃) des Fahrers bzw. Beifahrers zugeordneten Windschutzscheibenausschnittes (A₃) angeordnet ist.

8. Anordnung nach Anspruch 7, **dadurch gekennzeichnet, daß** eine Abbildungseinheit zum Erfassen eines nicht gewischten Windschutzscheibenausschnittes (A₃) angeordnet ist.

## Claims

1. Configuration for detecting objects located on the windscreen of a motor vehicle encompassing an imaging component with an optoelectronic sensor array and an objective which images a windscreen section (A₃) onto the photosensitive surface of the sensor array and focuses on this windscreen section (A₃) and comprising an analysis unit (P) which receives the electrical signals of the sensor array for the purpose of evaluating the windscreen section (A₃) imaged onto the photosensitive surface of the sensor array, **characterized by** the fact that the configuration (1) comprises additional imaging components connected to the analysis unit (P) for the purpose of imaging further, individually different, windscreen sections (A₁, A₂), with at least one imaging component being provided for covering a windscreen section (A₁, A₂) assigned to a primary visual field (G₁, G₂).

2. Configuration in accordance with Claim 1, **characterized by the fact** that at least one imaging component provided for covering a windscreen section (A₁, A₂) assigned to a primary visual field (G₁, G₂) is arranged in a viewing direction set at a downward slant angle to the windscreen (2).

3. Configuration in accordance with Claim 1 or Claim 2, **characterized by** the fact that each of the additional imaging components comprises its own objective and its own sensor array and that all imaging components are arranged assembled in one physical unit.

4. Configuration in accordance with Claim 1 or Claim 2, **characterized by** the fact that each of the additional imaging components comprises its own objective and a jointly utilized sensor array, with an exposure of the photosensitive surface of the sensor array by the individual imaging components being provided at least partially on the same sensor array zones.

5. Configuration in accordance with Claim 4, **characterized by** the fact that a shutter unit, which is electrically triggerable by utilizing an electro-optical effect, is switched on by an imaging component in the beam path of each imaging component for the purpose of controlling the exposure of the photosensitive surface of the sensor array.

6. Configuration in accordance with any of Claims 1 to 5, **characterized by** the fact that the photosensitive surface of the sensor array representing the image plane and/or the objective plane of an imaging component is set at a slant angle towards the imaging axis of the objective/sensor array arrangement so that the object plane focused by the objective is arranged oblique-angled to the imaging axis of the objective/sensor array arrangement.

7. Configuration in accordance with any of Claims 1 to 6, **characterized by** the **fact that** the configuration encompasses three imaging components of which one is arranged to cover a windscreen section (A₁) assigned to the primary visual field (G₁) of the driver, a further one to cover a windscreen section (A₂) assigned to the primary visual field (G₂) of the passenger and a third imaging component for covering a windscreen section (A₃) assigned to the secondary visual field (G₃) of the driver and/or passenger.

8. Configuration in accordance with Claim 7, **characterized by the fact** that an imaging component is arranged for covering a windscreen section (A₃) which is not wiped.

## Revendications

1. Agencement pour la détection d'objets se trouvant sur le pare-brise d'un véhicule automobile, lequel agencement comprend une unité de représentation avec un réseau capteur et un objectif qui, représentant un secteur de la vitre du pare-brise sur la surface photosensible dudit réseau capteur, est focalisé sur ledit secteur de la vitre du pare-brise, et comprend une unité d'évaluation du secteur de la vitre du pare-brise représenté sur la surface photosensible du réseau capteur, laquelle unité d'évaluation est influencée par les signaux électriques du réseau capteur, **caractérisé en ce que** ledit agencement (1) comprend d'autres unités de représentation qui sont raccordées à l'unité d'évaluation (P) pour la représentation d'autres secteurs de glace de pare-brise (A₁, A₂) différant les uns des autres, une unité de représentation au moins étant prévue pour la saisie d'un secteur du pare-brise (A₁, A₂) coordonné à une zone d'observation primaire (G₁, G₂).

2. Agencement selon la revendication 1, **caractérisé en ce qu**'au moins une unité de représentation, prévue pour la saisie d'un secteur de pare-brise (A₁, A₂) coordonné à une zone d'observation primaire (G₁, G₂), est disposée, par rapport au pare-brise (2), dans une direction de visée orientée obliquement, vers le bas.

3. Agencement selon la revendication 1 ou 2, **caractérisé en ce que** chacune des autres unités de représentation comprend son propre objectif et son propre réseau capteur et que toutes lesdites unités de représentation sont disposées groupées en une unité concrète.

4. Agencement selon la revendication 1 ou 2, **caractérisé en ce que** les autres unités de représentation comportent chacune un propre objectif et utilisent un réseau capteur commun, un éclairage de la surface photosensible du réseau capteur par les unités de représentation individuelles étant prévu, au moins partiellement, sur ces zones dudit réseau capteur.

5. Agencement selon la revendication 4, **caractérisé en ce que**, dans la trajectoire du faisceau de chaque unité de représentation, une unité d'obturation, excitable électriquement en recourant à un effet électro-optique, est connectée pour la commande d'un éclairage de la surface photosensible du réseau capteur par une unité de représentation.

6. Agencement selon l'une des revendication 1 à 5, **caractérisé en ce que** la surface photosensible du réseau capteur représentant le plan de l'image et /ou le plan de l'objectif d'une unité de représentation est incliné vers l'axe de représentation de l'ensemble objectif-réseau capteur de sorte que le plan de l'objet focalisé par l'objectif soit disposé à angle oblique par rapport à l'axe de représentation de l'ensemble objectif-réseau capteur.

7. Agencement selon l'une des revendication 1 à 6, **caractérisé en ce que** ledit agencement comprend trois unités de représentation dont l'une est disposée pour la saisie d'un secteur de pare-brise (A₁) coordonné à la zone d'observation primaire (G₁) du conducteur, une autre pour la saisie d'un secteur de pare-brise (A₂) coordonné à la zone d'observation primaire (G₂) du passager voisin du conducteur et une troisième pour la saisie d'un secteur de pare-brise (A₃) coordonné à la zone d'observation secondaire (G₃) du conducteur resp. du passager voisin du conducteur.

8. Agencement selon la revendication 1, **caractérisé en ce qu**'une unité de représentation est disposée pour la saisie d'un secteur de pare-brise (A3) non essuyé.
